# EUROPÄISCHE PATENTSCHRIFT

(11) **EP 0 640 265 B1**
(45) Veröffentlichungstag und Bekanntmachung des Hinweises auf die Patenterteilung: **04.03.1998**
(21) Anmeldenummer: 92909715.2
(22) Anmeldetag: 12.05.1992
(51) Int. Cl.: H04N 5/208, H04B 1/12

(54) **ÜBERTRAGUNGSANORDNUNG FÜR DIE ÜBERTRAGUNG EINES AUF EINE TRÄGERSCHWINGUNG AUFMODULIERTEN NUTZSIGNALES**
TRANSMISSION DEVICE FOR TRANSMITTING A WANTED SIGNAL MODULATED ON A CARRIER
SYSTEME DE TRANSMISSION POUR LA TRANSMISSION D'UN SIGNAL UTILE MODULE SUR UNE PORTEUSE

(43) Veröffentlichungstag der Anmeldung: 01.03.1995
(73) Patentinhaber: Nokia (Deutschland) GmbH, 75175 Pforzheim (DE)
(72) Erfinder: REIME, Gerd, D-7542 Schömberg 4 (DE)
(86) Internationale Anmeldenummer: EP9201041
(87) Internationale Veröffentlichungsnummer: WO9323951

(56) Entgegenhaltungen:
- EP-A- 0 365 330
- WO-A-85/00686
- DE-A- 2 048 986
- DE-A- 2 811 255
- DE-A- 3 809 394
- DE-C- 3 516 913
- US-A- 4 179 710
- US-A- 4 284 942
- US-A- 4 966 160

## Beschreibung

Die Erfindung betrifft eine Übertragungsanordnung für die Übertragung eines auf eine Trägerschwingung aufmodulierten Nutzsignales entsprechend dem Oberbegriff des Anspruches 1.

Übertragungsanordnungen für die Übertragung eines auf eine Trägerschwingung aufmodulierten Nutzsignales mit einem in den Übertragungsweg des Nutzsignales in der Übertragungsanordnung geschalteten, auf die Frequenz der Trägerschwingung abgestimmten Bandfilters sind insbesondere aus der Funk- oder Nachrichtentechnik oder der Datentechnik bekannt. Diese Nutzsignale sollen so übertragen werden, daß am Empfangsort wenigstens eine einigermaßen sichere Information für die Weiterverarbeitung der Daten oder die Wiedergabe einer Ton- oder Bilddarstellung liefern.

Bei der Übertragung amplitudenmodulierter Nutzsignale, beispielsweise von Tonsignalen im Kurzwellenbereich, tritt insbesondere nachts oder bei weiten Funkübertragungsstrecken ein Fading auf, das die übertragenen Nutzsignale derart verzerrt und mit Störgeräuschen überlagert, daß die Information dieser Nutzsignale, zum Beispiel Sprache und Musik, nur noch schwer oder zeitweise überhaupt nicht mehr verständlich oder erkennbar ist. Das gleiche gilt für auf diese Weise übertragene Datensignale. In weniger dicht besiedelten Gegenden großer Flächenausdehnung der Erde ist jedoch eine Verbreitung von Nachrichten und/oder Unterhaltungssendungen nur mittels amplitudenmodulierter Nutzsignale wirtschaftlich möglich.

Andererseits wirft auch die Übertragung frequenzmodulierter Nutzsignale insbesondere in dicht bebauten oder gebirgigen Gebieten in Folge stark wechselnder Empfangsfeldstärken ihre Probleme auf. Bei sehr kleinen Feldstärken treten insbesondere in den außenliegenden Bereichen der Seitenbänder, d. h. bei einer Tonfrequenzübertragung im Bereich der hohen Töne, erhebliche Störungen auf, die dort insbesondere ein starkes Rauschen verursachen.

Bei der Übertragung von frequenzmodulierten Nutzsignalen, die zuvor auf Videobändern aufgezeichnet waren, tritt ein störenden Informationsverlust dadurch auf, daß das obere Seitenband nahezu vollständig abgeschnitten wird. Zur wenigstens teilweisen Wiederherstellung dieses Seitenbandes wird in der EP-A-0 484 631, veröffentlicht an 13.05.92, vorgeschlagen, ein amplitudengesteuertes Laufzeitglied im Übertragungsweg des Nutzsignales anzuordnen, das die Phase der einzelnen Schwingungen abhängig von der Amplitude dieser Schwingungen so verändert, daß dadurch eine Schwingung entsteht, die sowohl das untere als auch das obere Seitenband als Information enthält. Außerdem ist in dieser Anmeldung vorgeschlagen, in einem weichen Schaltübergang anstelle des Laufzeitgliedes ein verhältnismäßig schmalbandiges Bandfilter in den Übertragungsweg zu schalten, wenn eine einigermaßen einwandfreie Demodulation des übertragenen Nutzsignales nicht mehr gewährleistet ist. Dazu enthält die vorgeschlagene Entzerrerschaltung einen Fehlerdetektor, der erkennt und als Fehler wertet, ob erwartete Schwingungen ausbleiben oder mit einer so kleinen Amplitude übertragen werden, daß diese einen im Fehlerdetektor eingestellten Schwellwert nicht erreichen, und der ein die Fehlerhäufigkeit kennzeichnendes Fehlsignal erzeugt. Die weiche Umschaltung vom Laufzeitbetrieb in den Bandfilterbetrieb erfolgt dann abhängig von der Fehlerhäufigkeit, derart, daß mit zunehmender Fehlerhäufigkeit der Bandfilterbetrieb schon bei kleinen Signalamplituden eingeschaltet wird. Mit den vorgeschlagenen Maßnahmen wird einerseits abhängig von der Signalamplitude die geeignetere von zwei auswählbaren Entzerrungsanordnungen ausgewählt und andererseits die Auswahlgrenze abhängig von der Fehlerhäufigkeit festgelegt.

Darüber hinaus ist aus der Druckschrift DE-A-2 048 986 ein automatisch einstellbarer Dämpfungsentzerrer bekannt, bei dem aus dem Ausgangssignal des Entzerrers ein Fehlersignal gewonnen wird, mit dem die Filterkurven einer Anzahl von mehreren parallelen Bandpassfilterstufen eingestellt werden, so daß im Entzerrer ein an den Übertragungsfrequenzgang angepaßter über die Frequenz variabler Dämpfungsverlauf entsteht.

Ein solcher Dämpfungsentzerrer ist dafür ausgelegt, in einem speziellen Abgleichvorgang die Dämpfungsentzerrer von Fernmeldeleitungen mit Hilfe eines Gleitfrequenz-Oszillators, der über den Übertragungsbereich eine konstante Amplitude abgibt, einzustellen.

Diese Signalamplitudenverhältnisse liegen bei Rundfunkübertragungen nicht vor. Dieser bekannte Dämpfungsentzerrer ist deshalb für die vorgesehene Anwendung ungeeignet.

Aus der DE-A-3 516 913 ist eine automatische Seitenband-Pegelregelung bei einer FM Signalübertragung bzw. der Wiedergabe einer FM Aufzeichnung bekannt. Dabei werden insbesondere höhere Frequenzanteile adaptiv verstärkt oder gedämpft, so daß eine ungleiche Bedämpfung der beiden Seitenbänder bei der Aufzeichnung ausgeglichen wird. Eine solche Schaltung ist ebenfalls für die vorgesehene Anwendung ungeeignet, da sie nur die Amplitude des oberen Seitenbandes korrigiert.

Aus der Druckschrift EP-A-0 365 330 ist eine Schaltung für die Wiedergabe von mit FM aufgezeichneten Signalen bekannt. Zur Verbesserung der Wiedergabe von Signalsprüngen mit Preemphase im Basisbandsignal, bei denen es zu einem Ausrasten des FM-Demodulators kommen kann (reversal of white peak), wird in einen Hochpasszweig ein adaptives Bandpassfilter geschaltet, um kleine FM Trägeramplituden wiederzugewinnen.

Aus der Druckschrift US-A-4 966 160 ist außerdem noch eine Schaltung bekannt, in der die Bandbreite eines Bandfilters, welches ein Mikrophonsignal empfängt, gesteuert wird. Die Schaltung weist einen Fehlerintegrator auf, der zur Steuerung einer Signalausgangsverstärkung verwendet wird. Auch diese Lösung benötigt zur Funktion über den gesamten Übertragungsbereich ein Referenzsignal mit konstanter Amplitude und ist deshalb für die vorgesehene Anwendung nicht geeignet.

Der Erfindung liegt die Aufgabe zugrunde, eine Schaltungsanordnung zur Durchführung von Maßnahmen zur Wiederherstellung bei der Übertragung verlorengegangener Informationen eines übertragenen Nutzsignales, die nicht im Bereich einseitiger Seitenbandbeschneidung liegen, anzugeben. Diese Aufgabe wird gemäß der Erfindung durch die im kennzeichnenden Teil des Anspruches 1 angegebenen Merkmale gelöst.

Die Erfindung geht davon aus, daß die eingangs geschilderten Informationsstörungen der übertragenen Nutzsignale am Empfangsort der Informationswiedergabe oder -verarbeitung insbesondere von einem Mißverhältnis der Trägeramplitude zu den Amplituden der Seitenbandschwingungen oder bei der Amplitudenmodulation den Amplituden der Schwingungen des Nutzsignales bei der Demodulation verursacht werden und daß sehr stark entdämpfte, auf die Trägerfrequenz abgestimmte Bandfilterkreise durch eine große Spannungsüberhöhung und eine gleichzeitige Einschränkung der Bandbreite dieses Mißverhältnis weitgehend korrigieren. So wird mit den Maßnahmen der Erfindung ohne großen Schaltungsaufwand ein hohes Maß an Informationsgüte zurückgewonnen.

Die Unteransprüche kennzeichnen vorteilhafte Ausgestaltungen der Erfindung.

Die Erfindung wird nachfolgend anhand vorteilhafter Ausführungsbeispiele, auf die der Umfang der in den Ansprüchen beanspruchten Erfindung nicht beschränkt ist, näher erläutert. In den zugehörigen Zeichnungen zeigen:
- Figur 1: ein Blockschaltbild einer Übertragungsanordnung mit einem Fehlerdetektor und einem von diesem in seiner Filtergüte einstellbaren Bandfilter,
- Figur 2: ein Diagramm a) mit tatsächlichen und mit erwarteten Schwingungen eines detektierten Schwingungszuges und ein Diagramm b) mit der aus den Fehlersignalimpulsen des Diagrammes a) gebildeten, die Fehlerhäufigkeit anzeigenden Fehlersignalkurve,
- Figur 3: eine Gütewandlerkennlinie,
- Figur 4: Bandfilter-Durchlaßkurven bei verschiedenen eingestellten Filtergüten des Bandfilters,
- Figur 5: ein teilweise ausführlicheres Schaltbild eines Ausführungsbeispiels einer Übertragungsanordnung mit einem in seiner Filtergüte einstellbaren Bandfilter und einem Fehlerdetektor zur Einstellung der Filtergüte des Bandfilters,
- Figur 6: Kurven der Amplitudenwerte der FM-Schwingungen an einem Bandfilter unterschiedlich eingestellter Filtergütewerte für eine Übertragung geringer, mittlerer und hoher von der Fehlersignalschaltung angezeigter Fehlerhäufigkeit.

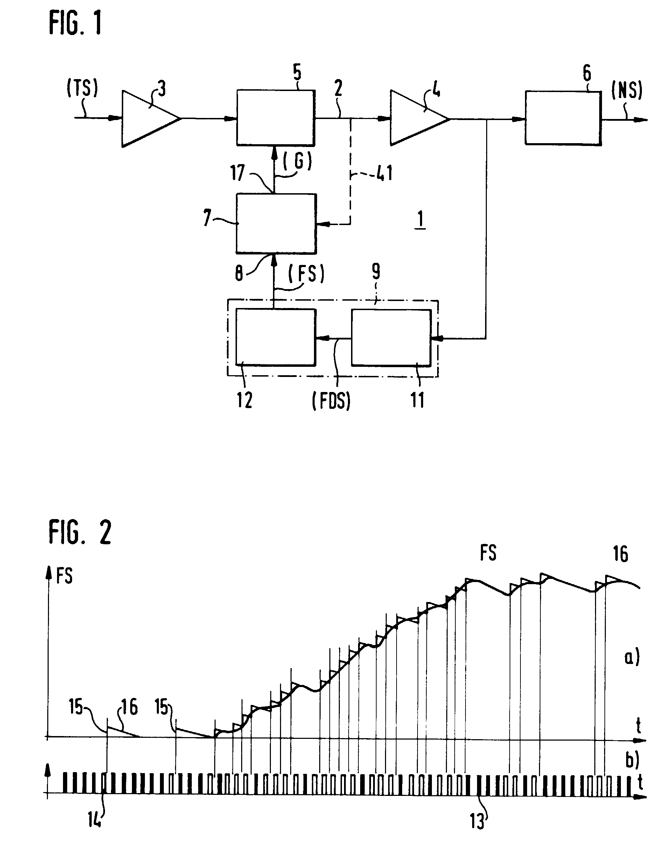

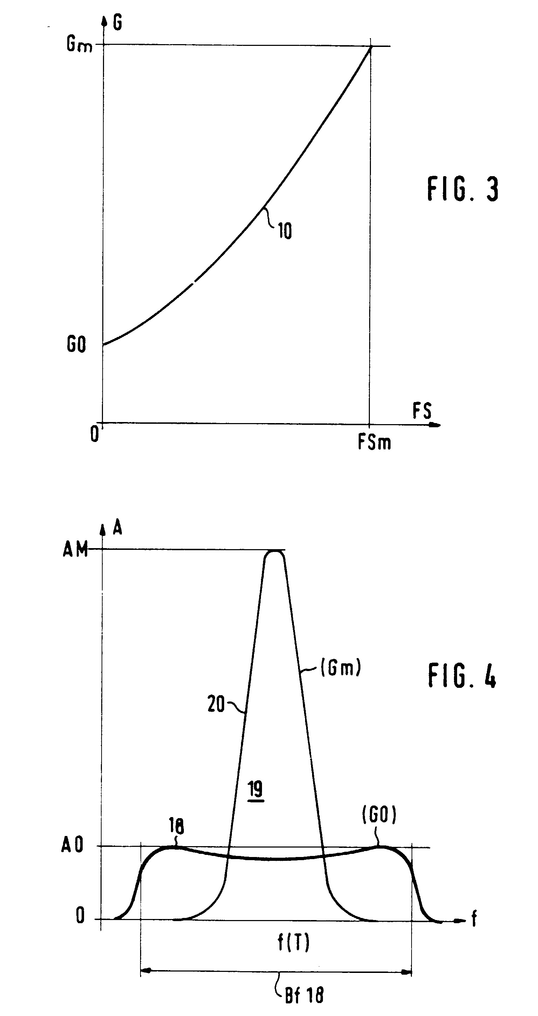

In Figur 1 ist eine Übertragungsanordnung 1 mit einem Signalübertragungsweg 2 dargestellt, auf dem ein auf eine Trägerschwingung TS aufmoduliertes Nutzsignal NS übertragen wird und der zwischen zwei Anpassverstärkern 3 und 4 ein in seiner Filtergüte G einstellbares Bandfilter 5 enthält und an dessen Ausgang ein Demodulator 6 angeschlossen ist. Die Ausbildung des Bandfilters kann mit LC-Kreisen, Gyratoren, aktiven Schaltelementen eines elektronischen Schaltkreises und/oder anderen geeigneten Schaltungselementen erfolgen. In Demodulator 6 werden die Nutzsignale NS vom Trägersignal TS getrennt und zur weiteren Übertragung und Verarbeitung am Ausgang des Demodulators 6 ausgegeben. An das Bandfilter 5 ist eine Gütestellschaltung 7 angeschlossen, die auch Bestandteil des Bandfilters 5 sein kann und die an ihrem Stelleingang 8 von einem Fehlerhäufigkeitssignal FS einer Fehlersignalschaltung 9 in einen Stellzustand eingestellt wird, an dem einem bestimmten Wert des Fehlerhäufigkeitssignals FS ein bestimmter Wert der Filtergüte G des mit der Gütestellschaltung 7 verbundenen Bandfilters 5 zugeordnet ist. Diese Zuordnung wird durch eine in der Gütestellschaltung 7 eingestellte Gütewandlerkennlinie 10 erreicht, die die Einstellfunktionsweise der Gütestellschaltung beschreibt und in Figur 3 als Kurve 10 dargestellt ist. Die Fehlersignalschaltung 9 enthält einen Fehlerdetektor 11, dessen Eingang an den bandfilterausgangsseitigen Teil des Signalübertragungsweges 2 angeschlossen ist, und eine dem Fehlerdetektor nachgeschaltete Fehlerhäufigkeitsschaltung 12, die aus den Fehlerdetektorsignalen FDS ein die Häufigkeit der vom Fehlerdetektor 11 erzeugten Detektionssignale anzeigendes Fehlerhäufigkeitssignal FS bildet.

Im dargestellten Ausführungsbeispiel enthält der Fehlerdetektor eine Schaltung zur Erkennung der Frequenz der Trägerschwingung, so daß die Zeitpunkte einer erwarteten Schwingung des Trägersignals festliegen. Stellt der Fehlerdetektor zu diesem Zeitpunkt eine Schwingung mit einer Amplitude fest, die einen im Fehlerdetektor eingestellten Schwellwert überschreitet, wird kein Fehlerdetektorsignal ausgegeben. Dieser Fall ist im Diagramm b) der Figur 2 durch einen ausgefüllten Impuls 13 schematisch dargestellt. Tritt an dem zu erwartenden Zeitpunkt keine Schwingung mit ausreichender Amplitude auf, was im Diagramm b) der Figur 2 schematisch durch einen unausgefüllten Impuls 14 dargestellt ist, erzeugt der Fehlerdetektor nach Ablauf der Erwartungszeit einen Fehlerdetektorimpuls (FDS), der im Diagramm a) der Figur 2 jeweils durch einen senkrechten Strich 15 gekennzeichnet ist. Aus diesen Impulsen bildet die Fehlerhäufigkeitsschaltung 12 das Fehlerhäufigkeitssignal FS, dessen Gestaltungskurve 16 schematisch im Diagramm a) der Figur 2 dargestellt ist.

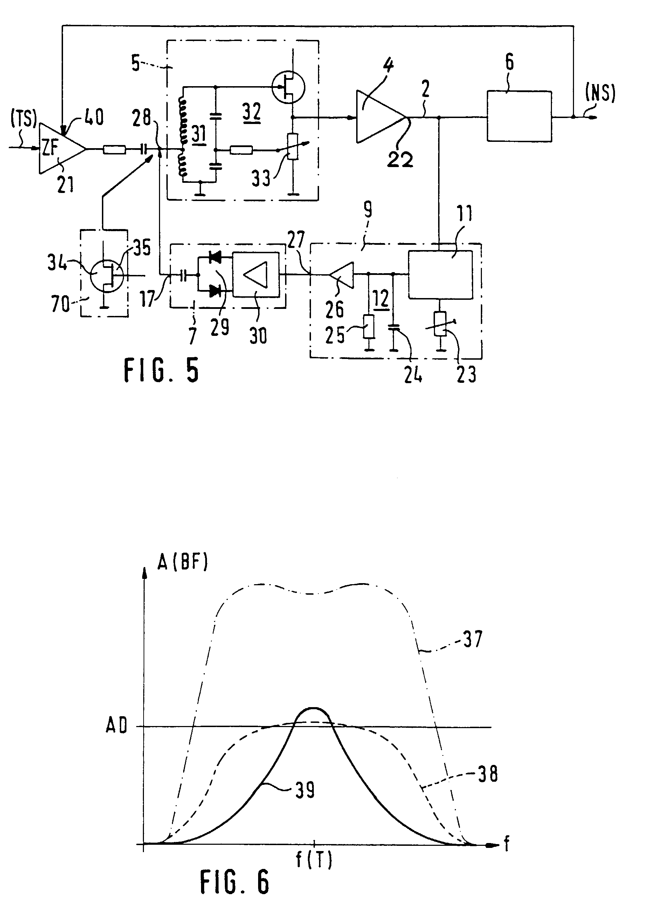

Der Ausgang 17 der Gütestellschaltung 7 bildet mit dem Bandfilter 5 eine Bandfilterschaltung mit der Filtergüte G, die über die in Figur 3 dargestellte Gütewandlerkennlinie 10 der Gütestellschaltung 7, abhängig von dem der Gütestellschaltung zugeführten Fehlerhäufigkeitssignal FS, in der Gütestellschaltung eingestellt ist. Hat das Fehlerhäufigkeitssignal FS den Wert 0, das heißt, erkennt der Fehlerdetektor 11 keinen Fehler der Nutzsignalübertragung, ist an der Gütestellschaltung eine minimale Filtergüte G0 eingestellt. Dadurch ist an der Bandfilterschaltung 5/17 eine in Figur 4 schematisch dargestellte Bandfilter-Übertragungskurve 18 mit einer Bandbreite Bf18 eingestellt, die wenigstens so groß ist wie die Nutzbandbreite der mit der Trägerschwingung TS zu übertragenden Nutzsignale NS.

Mit abnehmender Güte der Übertragung des Nutzsignals nimmt die mit der Fehlersignalschaltung 9 detektierte Fehlerhäufigkeit zu. Die abnehmende Güte der Nutzübertragung wird mit einer zunehmenden Anhebung der Amplitude 19 des Trägersignales TS kompensiert. Dazu wird die Filtergüte G der Bandfilterschaltung 5/17 mit zunehmenden Wert des Fehlerhäufigkeitssignales FS erhöht, wie die Gütewandlerkennlinie 10 zeigt. Durch die Erhöhung der Filtergüte G der Bandfilterschaltung entsteht an der Ausgangsseite des Bandfilters eine zunehmende Spannungsüberhöhung der Trägeramplitude, wodurch die Güte der Übertragung des Nutzsignales verbessert und die detektierte Fehlerhäufigkeit wieder gesenkt wird. Diese gegenläufige Wirkung auf die Fehlerhäufigkeit bewirkt eine stabile und optimale Einstellung der Filtergüte G der Bandfilterschaltung 5/17. Die Gütewandlerkennlinie 10 ist im dargestellten Ausführungsbeispiel so ausgebildet, daß sie bei einem maximalen Wert FSm des Fehlerhäufigkeitssignales FS etwa ihren maximalen Gütewert Gm erreicht, der bei dem dargestellten Ausführungsbeispiel gerade noch sicher vor dem Schwingungseinsatz der Bandfilterschaltung 5/17 liegt. Die zugehörige Spannungsüberhöhungskurve 20 ist in Figur 4 dargestellt und erreicht bei der Trägerfrequenz f(T) eine Spannungsüberhöhung der Amplitude Am des Trägersignals TS von über 30 db.

Anstelle das Bandfilter 5 zu bedämpfen kann in an deren deren Ausführungsbeispielen die Gütestellschaltung als einstellbare Rückkopplungsschaltung ausgebildet werden, deren Rückkopplungsfaktor mittels des von der Fehlersignalschaltung 9 erzeugten Fehlerhäufigkeitssignal FS so eingestellt wird, daß wiederum eine der Gütewandlerkennlinie 10 entsprechender Zusammenhang zwischen der am Bandfilter 5 eingestellte Filtergüte G und dem von der Fehlersignalschaltung 9 erzeugten Fehlerhäufigkeitssignal FS entsteht. In einem Figur 1 entsprechenden Ausführungsbeispiel mit einer Rückkopplungsschaltung als Gütestellschaltung ist die Rückkopplungsschaltung über eine gestrichelt gezeichnete Rückkopplungsleitung 41 mit dem Ausgang des Bandfilters verbunden.

Der Fehlerdetektor 11 kann in Ausführungsbeispielen der Übertragungsanordnung 1 so ausgebildet sein, daß er Fehler einzelner Trägerschwingungen oder in anderen Ausführungsbeispielen Fehlereigenschaften einer bestimmten Gruppe zusammenhängender Schwingungen bis hin zu einer fehlerhaften Gestaltung einer Hüllkurve eines derartigen Schwingungszuges der Übertragung detektiert.

In Figur 5 ist ein weiteres Ausführungsbeispiel einer Übertragungsanordnung zur Übertragung eines auf einer Trägerschwingung aufmodulierten Nutzsignales dargestellt, das gegenüber dem in Figur 1 dargestellten Ausführungsbeispiel weitere Einzelheiten zeigt. Einander entsprechenden Anordnungen sind mit den gleichen Bezugszeichen gekennzeichnet. Zur Übertragung eines in Amplitudenmodulation auf ein Trägersignal TS aufmodulierten Nutzsignales NS sind im Übertragungsweg 2 der Übertragungsanordnung ein regelbarer ZF-Verstärker 21, ein Bandfilter 5, ein Anpassverstärker 4 und AM-Demodulator 6 nacheinander angeordnet. Die an den Ausgang 22 des Anpassverstärkers 4 angeschlossene Fehlersignalschaltung 9 enthält einen Fehlerdetektor 11, dessen Detektionsschwellwert an einem Widerstand 23 einstellbar ist, und eine aus einem Speicherkondensator 24 und einem Ableitwiderstand 25 sowie einem Anpassverstärker 26 bestehende Fehlerhäufigkeitsschaltung 12. Zwischen den Ausgang 27 der Fehlerhäufigkeitsschaltung und den Eingang 28 des Bandfilters ist eine Gütestellschaltung 7 geschaltet, die zwei wechselstrommäßig antiparallel geschaltete Dioden 29 als stellbare Dämpfungswiderstände zur Bedämpfung des Bandfilters 5 und eine Anordnung 30 zur Erzeugung des Stellstromes für die Dioden 29 enthält. Die Erzeugung des Stellstromes für die Dioden 29 in Abhängigkeit von dem der Anordnung 30 zugeführten Fehlerhäufigkeitssignal FS ist in der Anordnung 30 so ausgebildet, daß in Verbindung mit der Widerstandscharakteristik der Ableitdioden 29 und dem Bandfilter 5 beispielsweise die in Figur 3 dargestellte Gütewandlerkennlinie 10 erhalten wird.

Das Bandfilter 5 enthält im dargestellten Ausführungsbeispiel einen LC-Bandfilterkreis 31 mit einem nachgeschalteten Rückkopplungsverstärker 32, der einen Einstellwiderstand 33 zur Einstellung der maximalen Filtergüte Gm vor dem Schwingungseinsatz bei gesperrten Dioden 29 der Gütestellschaltung 7 enthält. Durch diese Maßnahmen sind für das Bandfilter 5 Filtergütewerte von weit über 30 db erreichbar.

In einer anderen Ausbildung einer Gütestellschaltung 70, die in Figur 5 schematisch links neben der Gütestellschaltung 7 dargestellt ist, ist der die Bandfilterschaltung 5/17 dämpfende, stellbare Ableitwiderstand die Drain-Source-Strecke 34 eines einstellbaren Feldeffekttransistors 35 in einer nicht näher dargestellten Schaltungsausbildung. Eine weitere Möglichkeit einer Ausbildung der Einstellung der Filtergüte G des Bandfilters 5 ist beispielsweise dadurch gegeben, daß der Einstellwiderstand 33 des Rückkopplungsverstärkers 32 im Bandfilter 5 als elektronischer Stellwiderstand ausgebildet ist, dessen Widerstandsverhältnis für die Rückführung des Rück- oder Gegenkopplungssignals mittels des Wertes des Fehlerhäufigkeitssignales FS elektronisch derart einstellbar ist, daß damit eine der in Figur 3 dargestellten Gütewandlerkennlinie entsprechende Kennlinie hergestellt ist.

In einer anderen vorteilhaften Ausbildung der Übertragungsanordnung 1 ist die Fehlersignalschaltung 9 eine schnell ansprechende Modulationsgrad-Meßschaltung, die oberhalb eines bestimmten Wertes eines gemessenen oder detektierten Modulationsgrades ein Fehlerhäufigkeitssignal FS an ihrem Ausgang erzeugt, dessen Signalwert vom Wert des unzulässigen und damit durch das Fehlerhäufigkeitssignal zu korrigierenden Modulationsgrades abhängt.

Die in der Übertragungsanordnung gemäß Figur 5 enthaltene Fehlersignalschaltung 9 detektiert bei AM-übertragenen Nutzsignalen den Modulationsgrad dadurch, daß sie ein Fehlerhäufigkeitssignal FS bildet, dessen Wert die Anzahl der Schwingungen pro Zeiteinheit darstellt, deren Amplitude kleiner ist als ein an dem Einstellwiderstand 23 der Fehlersignalschaltung 9 eingestellter Schwellwert SW. Dieser Schwellwert ist beispielsweise so eingestellt, daß ein Fehler bei einem Modulationsgrad M gleich oder größer 70 % detektiert wird, wobei der Modulationsgrad das Verhältnis der Amplituden des Nutzsignales NS zu den Amplituden des Trägersignals TS ist. Dazu ist jedoch erforderlich, daß die Amplitude des Übertragungssignales am Eingang 28 des Bandfilters auf eine bestimmte mittlere Amplitudenhöhe eingeregelt ist. Deshalb ist ein Regeleingang 40 des eingangsseitigen regelbaren ZF-Verstärkers 21 des Übertragungsweges 2 mit dem Ausgang des AM-Demodulators 6 verbunden.

Durch diese Maßnahmen wird einerseits ein für die AM-Demodulation optimaler Modulationsgrad eingestellt, unabhängig davon, mit welchem Modulationsgrad das Nutzsignal NS bis zum Eingang 28 des Bandfilters 5 übertragen wird. Andererseits werden auch durch Auslöschungen oder andere Störungen wandernde oder schwebenden Löcher im Übertragungssignal, die durch mehr oder weniger große Auslöschungen des Trägersignals TS entstehen, als Modulationsfehler bewertet und ähnlich wie Modulationsfehler durch die am Bandfilter eingestellte Amplitudenüberhöhung weitgehend korrigiert und die Güte des übertragenen Nutzsignales wesentlich verbessert.

Bei der Übertragung frequenzmodulierter Nutzsignale NS auf einem Trägersignal TS im Funkverkehr kann in Abschattungsgebieten des Funkübertragungsfeldes die Empfangsfeldstärke so klein werden, daß insbesondere die äußeren Ränder der Seitenbänder eines FM-übertragenen Nutzsignales stark gestört werden. Auch in diesem Fall detektiert der Fehlerdetektor 11 einer beispielsweise in Figur 1 dargestellten Übertragungsanordnung 1 in zunehmendem Maße zu kleine oder fehlende Trägerschwingungen. Mit zunehmender Fehlerhäufigkeit wird mittels der Gütestellschaltung 7 die Filtergüte G der Filterschaltung 5/17 zunehmend so erhöht, daß an dem Bandfilter 5 eine zunehmende Spannungsüberhöhung auftritt und dadurch bis zu sehr kleinen Empfangsfeldstärken, bei denen normalerweise kein Empfang mehr möglich wäre, am Ausgang des Bandfilters ein für eine sichere Demodulation des Nutzsignales ausreichendes Übertragungssignal liegt.

In Figur 6 ist eine zur Frequenzachse parallele Linie 36 für die minimale Signalamplitude AD eingezeichnet, die vom FM-Demodulator 6 noch mit Sicherheit demoduliert wird. Außerdem sind in das Diagramm der Figur 6 die drei Kurven des Amplitudenganges von an den Ausgang des Bandfilters übertragenen Trägerschwingungen frequenzmodulierter Nutzsignale NS schematisch dargestellt, und zwar eine strichpunktierte Kurve 37 für ein mit ausreichender Feldstärke empfangenes FM-Signal, für das nahezu kein Fehlersignal detektiert wird, eine gestrichelt dargestellte Kurve 38 für ein mit einer stark abgeschwächten Feldstärke empfangenes FM-Signal, bei dem im Normalfall ein die Erkennung der Information des Nutzsignals erheblich erschwerendes Störsignal überlagert wäre und für das von der Fehlersignalschaltung 9 bereits eine hohe Fehlerhäufigkeit erkannt und eine dementsprechend hohe Filtergüte G an der Bandfilterschaltung 5/17 eingestellt ist und schließlich eine durchgezogene Kurve 39 für ein mit derart geringer Feldstärke empfangenes FM-Signal, daß im Normalfall die Information des empfangenen FM-Signals von Rausch- und Störsignales bis zur Unerkenntlichkeit überdeckt wäre, wenn nicht durch ein Fehlerhäufigkeitssignal der Fehlersignalschaltung 9 die Bandfilterschaltung 5/17 über die Gütestellschaltung 7 auf eine so hohe Filtergüte Gm eingestellt würde, daß die extrem hohe Spannungsüberhöhung des unbedämpften Bandfilters 5 noch eine für eine ausreichend sichere Demodulation des Nutzsignales ausreichendes FM-Signal liefert.

## Patentansprüche

1. Schaltungsanordnung zum Entzerren von Informationen eines Nutzsignals (NS), welches auf einer Trägerschwingung (TS) ohne einseitige Seitenbandbeschneidung moduliert ist und das ein Empfänger infolge der Übertragung verzerrt empfängt, mit einem auf die Trägerfrequenz (f(T)) der Trägerschwingung abgestimmten Bandfilter (5), das einem Demodulator (6) des Empfängers vorgeschaltet ist und mit einer das Bandfilter beeinflussenden Fehlersignalschaltung (9), die die Schwingungen am Bandfilter, deren Amplitude unterhalb eines, in der Fehlersignalschaltung eingestellten Schwellwertes (SW) bleiben, erkennt und ein die Häufigkeit der erkannten Fehlschwingungen entsprechendes Fehlerhäufigkeitssignal (FS) erzeugt,
**dadurch gekennzeichnet**, daß am Bandfilter (5) eine Gütestellschaltung (7) für die Filtergüte (G) angeschlossen ist, deren Stelleingang das Fehlerhäufigkeitssignal (FS) zugeführt wird, mit einer Gütewandlerkennlinie (10),
- durch die einerseits bei fehlenden Fehlerhäufigkeitssignal eine Filtergüte (G0) am Bandfilter eingestellt ist, bei der die Filterbandbreite (Bf18) wenigstens gleich der Übertragungsbandbreite des empfangenen Nutzsignals (NS) ist,
- und durch die andererseits bei einem für eine noch ausregelbare Fehlerrate erzeugten oberen Wert (FSn) des Fehlersignals (FS) eine Filtergüte (Gm) am Bandfilter eingestellt ist, bei der die Trägerschwingung (TS) am Ausgang des Bandfilters eine Spannungsüberhöhung aufweist.

2. Übertragungsanordnung nach Anspruch 1,
**dadurch gekennzeichnet**,
daß die Spannungsüberhöhung der Trägerschwingung (TS) am Ausgang des Bandfilters (5) bei dem oberen Wert (Gm) des Fehlerhäufigkeitssignals (FS) wenigstens 30 db beträgt.

3. Übertragungsanordnung nach Anspruch 1,
**dadurch gekennzeichnet**,
daß die einstellbare Gütestellschaltung (7) eine elektronisch einstellbare Widerstandsschaltung ist, die als Dämpfungswiderstand an das Bandfilter (5) angeschlossen ist und deren Widerstandswert mit dem Signalwert des dem Stelleingang der Widerstandsschaltung zugeführten Fehlerhäufigkeitssignales einstellbar ist.

4. Übertragungsanordnung nach Anspruch 3,
**dadurch gekennzeichnet**,
daß die Widerstandsschaltung eine an ihrem Stellausgang (17) durch das Fehlerhäufigkeitssignal (FS) einstellbare antiparallele Diodenschaltung (29) ist.

5. Übertragungsanordnung nach Anspruch 3,
**dadurch gekennzeichnet**,
daß die Widerstandsschaltung eine Feldeffekttransistorschaltung (70) ist, in der die Source-Drain-Strecke (34) des Feldeffekttransistors (35) als Ableitwiderstand geschaltet ist, dessen Widerstandswert durch den Signalwert eines dem Stelleingang der Feldeffekttransistorschaltung zugeführten Fehlerhäufigkeitssignales (FS) einstellbar ist.

6. Übertragungsanordnung nach Anspruch 1,
**dadurch gekennzeichnet**,
daß die einstellbare Gütestellschaltung (7) eine elektronisch einstellbare Rückkopplungsschaltung ist, die zwischen den Ausgang und den Eingang des Bandfilters (5) geschaltet ist und deren Rückkopplungsfaktor mit dem Signalwert des einem Stelleingang der Rückkopplungsschaltung zugeführten Fehlerhäufigkeitssignales (FS) einstellbar ist.

## Claims

1. Circuit arrangement for equalizing information of a useful signal (NS), which is modulated on a carrier (TS) without unilateral sideband reduction and which, as a result of the transmission, is received distorted by a receiver, said circuit arrangement having a bandpass filter (5) tuned to the carrier frequency (f(T)), which is connected upstream of a demodulator (6) of the receiver, and having an error signal circuit (9) influencing the bandpass filter, which detects the oscillations at the bandpass filter, whose amplitude remains below a threshold value (SW) set in the error signal circuit, and generates an error rate signal (FS) corresponding to the frequency of the detected error oscillations, **characterised in that** a Q-setting circuit (7) for the Q (G) of the filter is connected to the bandpass filter (5), to whose control input the error rate signal (FS) is fed, with a Q conversion
characteristic (10),
- by which on the one hand a filter Q (GO) is set at the bandpass filter in the absence of an error rate signal, at which the filter bandwidth (Bf18) is at least equal to the transmission bandwidth of the received useful signal (NS),
- and by which on the other hand, for an upper value (FSn) of the error signal (FS) generated for an error rate still capable of being corrected, a filter Q (Gm) is set at the bandpass filter, at which the carrier (TS) exhibits a voltage rise at the output of the bandpass filter.

2. Transmission arrangement according to Claim 1,
**characterised in that** the voltage rise of the carrier (TS) at the output of the bandpass filter (5) is at least 30 dB at the upper value (Gm) of the error rate signal (FS).

3. Transmission arrangement according to Claim 1,
**characterised in that** the adjustable Q-setting circuit (7) is an electronically variable resistance circuit which is connected as a damping resistor to the bandpass filter (5) and whose resistance value can be varied by the signal value of the error rate signal fed to the control input of the resistance circuit.

4. Transmission arrangement according to Claim 3,
**characterised in that** the resistance circuit is an antiparallel diode circuit (29) that can be adjusted at its control output (17) by the error rate signal (FS).

5. Transmission arrangement according to Claim 3,
**characterised in that** the resistance circuit is a field-effect transistor circuit (70) in which the source-drain junction (34) of the field-effect transistor (35) is connected as a leakage resistor whose resistance value can be adjusted by the signal value of an error rate signal (FS) fed to the control input of the field-effect transistor circuit.

6. Transmission arrangement according to Claim 1,
**characterised in that** the adjustable Q-setting circuit (7) is an electronically variable feedback circuit that is connected between the output and the input of the bandpass filter (5), and whose feedback factor can be adjusted by the signal value of an error rate signal (FS) fed to a control input of the feedback circuit.

## Revendications

1. Circuit de suppression de la distorsion d'informations d'un signal utile (NS), modulé sur une onde porteuse (TS) sans découpage de bande latérale sur un côté et reçu sur un récepteur avec une distorsion due à la transmission, avec un filtre passe-bande (5) accordé sur la fréquence porteuse (f(T)) de l'onde porteuse, branché en amont d'un démodulateur (6) du récepteur, et avec un circuit de signal d'erreur (9) influant sur le filtre passe-bande et identifiant, au niveau du filtre passe-bande, les ondes dont l'amplitude est inférieure à une valeur de seuil (SW) réglée dans le circuit de signal d'erreur et générant un signal de quantité d'erreur (FS) correspondant à la quantité d'ondes erronées identifiées, caractérisé en ce qu'au filtre passe-bande (5) est raccordé un circuit de réglage de qualité (7) pour la qualité du filtre (G), à l'entrée de réglage duquel est amené le signal de quantité d'erreur (FS), avec une caractéristique de conversion de qualité (10),
- au moyen de laquelle d'une part, en l'absence de signal de quantité d'erreur, on règle sur le filtre passe-bande une qualité de filtre (GO) pour laquelle la largeur de bande de filtrage (Bf18) est au moins égale à la largeur de bande de transmission du signal utile (NS) reçu,
- et au moyen de laquelle, d'autre part, pour une valeur supérieure (FSn) du signal d'erreur (FS), générée pour un taux d'erreur pouvant encore être régulé, on règle sur le filtre passe-bande une qualité de filtre (Gm) pour laquelle l'onde porteuse (TS), à la sortie du filtre passe-bande, présente une augmentation de la tension.

2. Dispositif de transmission selon la revendication 1, caractérisé en ce que l'augmentation de tension de l'onde porteuse (TS) à la sortie du filtre passe-bande pour la valeur supérieure (Gm) du signal de quantité d'erreur (FS) est d'au moins 30 db.

3. Dispositif de transmission selon la revendication 1, caractérisé en ce que le circuit de réglage de qualité (S) réglable est un circuit à résistance réglable de façon électronique, qui est raccordé en tant que résistance d'amortissement au filtre passe-bande (5) et dont la valeur de résistance est réglable avec la valeur du signal de quantité d'erreur amené à l'entrée de réglage du circuit à résistance.

4. Dispositif de transmission selon la revendication 3, caractérisé en ce que le circuit à résistance est un branchement à diode (29) antiparallèle, réglable à sa sortie de réglage (17) au moyen du signal de quantité d'erreur (FS).

5. Dispositif de transmission selon la revendication 3, caractérisé en ce que le circuit à résistance est un circuit à transistor à effet de champ (70) dans lequel la voie source-drain (34) du transistor à effet de champ (35) est branchée à titre de résistance de dérivation dont la valeur de résistance est réglable au moyen de la valeur d'un signal de quantité d'erreur (FS) amenée à l'entrée de réglage du circuit à transistor à effet de champ.

6. Dispositif de transmission selon la revendication 1, caractérisé en ce que le circuit de réglage de qualité (7) réglable est un circuit à rétroaction réglable électroniquement, qui est branché entre la sortie et l'entrée du filtre passe-bande (5) et dont le facteur de rétroaction est réglable avec la valeur du signal de quantité d'erreur (FS) amené à une entrée de réglage du circuit de rétroaction.
